# EUROPÄISCHE PATENTANMELDUNG

(11) **EP 4 101 763 A1**
(43) Veröffentlichungstag der Anmeldung: **14.12.2022**
(21) Anmeldenummer: 22176497.0
(22) Anmeldetag: 31.05.2022
(51) Int. Cl.: B64D 11/06, B60N 3/00, B60N 2/02

(54) **TISCHEINRICHTUNG FÜR EIN FAHRZEUG**

(30) Priorität: 10.06.2021 DE 102021114951
(71) Anmelder: Lisa Dräxlmaier GmbH, 84137 Vilsbiburg (DE)
(72) Erfinder: JONISCHKEIT, Christoph, 84453 Mühldorf (DE)

(57) **Zusammenfassung**

Die Erfindung betrifft eine Tischeinrichtung (10) für ein Fahrzeug, welche dazu eingerichtet ist, zwischen einer Verstaustellung (12) und wenigstens einer Gebrauchsstellung (14) verstellt zu werden, mit einer Tischplatteneinrichtung (20), welche dazu eingerichtet ist, in der wenigstens einen Gebrauchsstellung (14) eine Tischfläche (16) bereitzustellen, und mit einer Halteeinrichtung (22), an welcher die Tischplatteneinrichtung (20) gehalten ist, wobei die Tischplatteneinrichtung (20) dazu eingerichtet ist, bei einem Verstellen der Tischeinrichtung (10) zwischen der Verstaustellung (12) und der wenigstens einen Gebrauchsstellung (14) relativ zu der Halteeinrichtung (22) um wenigstens zwei zueinander unterschiedliche Schwenkachsen (26, 28) verschwenkt zu werden.

## Beschreibung

### Technisches Gebiet

Die Erfindung betrifft eine Tischeinrichtung für ein Fahrzeug, insbesondere ein Kraftfahrzeug, insbesondere einen Kraftwagen.

### Stand der Technik

Es ist bereits allgemein bekannt, in einem Fahrzeug eine Tischeinrichtung anzuordnen, welche dazu eingerichtet ist, eine Tischfläche für eine Person bereitzustellen. Auf dieser Tischfläche kann die Person, bei welcher es sich insbesondere um einen Fahrzeuginsassen des Fahrzeugs handelt, Gegenstände ablegen.

### Beschreibung der Erfindung

Aufgabe der vorliegenden Erfindung ist es, eine Lösung bereitzustellen, welche ein Verstellen einer Tischeinrichtung aus einer Verstaustellung in wenigstens eine Gebrauchsstellung ermöglicht, wobei für eine besonders gute Lage der Tischeinrichtung in der wenigstens einen Gebrauchsstellung besonders wenige Bewegungen der Tischeinrichtung notwendig sind.

Diese Aufgabe wird erfindungsgemäß durch den Gegenstand des unabhängigen Patentanspruchs gelöst. Weitere mögliche Ausgestaltungen der Erfindung sind in den Unteransprüchen, der Beschreibung und den Figuren offenbart.

Die Erfindung betrifft eine Tischeinrichtung für ein Fahrzeug, insbesondere für ein Kraftfahrzeug, insbesondere für einen Kraftwagen, insbesondere für einen Personenkraftwagen. Die Tischeinrichtung ist dazu eingerichtet, zwischen einer Verstaustellung und wenigstens einer Gebrauchsstellung verstellt zu werden. Die Tischeinrichtung umfasst eine Tischplatteneinrichtung, welche dazu eingerichtet ist, in der wenigstens einen Gebrauchsstellung eine Tischfläche bereitzustellen. Weiterhin umfasst die Tischeinrichtung eine Halteeinrichtung, an welcher die Tischplatteneinrichtung gehalten ist. Die Tischplatteneinrichtung ist dazu eingerichtet, bei einem Verstellen der Tischeinrichtung zwischen der Verstaustellung und der wenigstens einen Gebrauchsstellung relativ zu der Halteeinrichtung um wenigstens zwei zueinander unterschiedliche Schwenkachsen verschwenkt zu werden. Unter den zwei unterschiedlichen Schwenkachsen ist zu verstehen, dass die beiden Schwenkachsen nicht zueinander identisch sind. Die Tischplatteneinrichtung wird somit über die mehreren Schwenkachsen umgeklappt beim Verstellen der Tischeinrichtung zwischen der Verstaustellung und der wenigstens einen Gebrauchsstellung. Durch das Verschwenken der Tischplatteneinrichtung um die zwei zueinander unterschiedlichen Schwenkachsen kann eine besonders komplexe Verschwenkbewegung der Tischplatteneinrichtung beim Verstellen der Tischeinrichtung zwischen der Verstaustellung und der wenigstens einen Gebrauchsstellung umgesetzt werden.

In weiterer Ausgestaltung der Erfindung ist es vorgesehen, dass eine erste Schwenkachse und die zweite Schwenkachse schräg zueinander ausgerichtet sind. Das bedeutet, dass die erste Schwenkachse und die zweite Schwenkachse nicht parallel zueinander ausgerichtet sind. Durch die schräge Ausrichtung der zwei Schwenkachsen zueinander kann die Tischplatteneinrichtung besonders umfangreich im Raum bewegt werden bei dem Verstellen der Tischeinrichtung. Hierdurch kann die Tischplatteneinrichtung besonders gut um einen Fahrzeuginsassen herum verschwenkt werden beim Verstellen der Tischeinrichtung aus der Verstaustellung in die wenigstens eine Gebrauchsstellung, wodurch der Fahrzeuginsasse besonders wenig durch die Tischplatteneinrichtung gestört wird.

In diesem Zusammenhang kann es insbesondere vorgesehen sein, dass die erste Schwenkachse und die zweite Schwenkachse durch einen geknickten Stift vorgegeben werden, über welchen die Tischplatteneinrichtung an der Halteeinrichtung gehalten ist. Hierbei kann ein erstes freies Ende des Stifts um die erste Schwenkachse schwenkbar an der Halteeinrichtung gehalten sein und ein zweites freies Ende des Stifts um die zweite Schwenkachse schwenkbar an der Tischplatteneinrichtung gehalten sein. Hierbei definiert ein Winkel, den das erste freie Ende des Stifts mit dem zweiten freien Ende des Stifts einschließt, den Winkel, den die erste Schwenkachse mit der zweiten Schwenkachse einschließt. Der Stift ermöglicht somit ein besonders einfaches Umsetzen der Verschwenkbarkeit der Tischplatteneinrichtung sowohl um die erste Schwenkachse als auch um die zweite Schwenkachse, welche schräg zueinander ausgerichtet sind. In weiterer Ausgestaltung der Erfindung ist ein die Tischplatteneinrichtung mit der Halteeinrichtung verbindendes Stützelement vorgesehen, welches an der Halteeinrichtung um die erste Schwenkachse schwenkbar gehalten ist und an welchem die Tischplatteneinrichtung um die zweite Schwenkachse schwenkbar gehalten ist. Das Stützelement ermöglicht ein besonders weites Wegverschwenken der Tischplatteneinrichtung von der Halteeinrichtung. Hierdurch kann die Tischfläche mit einem besonders großen Abstand zu der Halteeinrichtung für einen Fahrzeuginsassen des Fahrzeugs bereitgestellt werden. Das Stützelement ermöglicht somit, dass die Tischplatteneinrichtung nicht nur lediglich in einem unmittelbaren Nahbereich der Halteeinrichtung bereitgestellt werden kann. Die an dem Stützelement gehaltene Tischplatteneinrichtung kann gemeinsam mit dem Stützelement um die erste Schwenkachse relativ zu der Halteeinrichtung verschwenkt werden beim Verstellen der Tischeinrichtung zwischen der Verstaustellung und der wenigstens einen Gebrauchsstellung. Für ein Bereitstellen der Tischfläche kann die Tischplatteneinrichtung relativ zu dem Stützelement um die zweite Schwenkachse verschwenkt, insbesondere geklappt, werden, wodurch die Tischfläche im Fahrzeuginnenraum des Fahrzeugs in Einbaulage der Tischeinrichtung zumindest im Wesentlichen waagrecht in Bezug auf eine Normalausrichtung des Kraftfahrzeugs ausgerichtet werden kann.

Es ist in weiterer alternativer Ausgestaltung der Erfindung vorgesehen, dass die Schwenkachsen parallel zueinander ausgerichtet sind. Insbesondere ist es vorgesehen, dass die Tischplatteneinrichtung bei einer Verstellung der Tischeinrichtung aus der Verstaustellung in die wenigstens eine Gebrauchsstellung in einer ersten Richtung um die zweite Schwenkachse relativ zu dem Stützelement verschwenkt wird, wohingegen das Stützelement relativ zu der Halteeinrichtung in einer zu der ersten Richtung entgegengesetzten zweiten Richtung um die erste Schwenkachse verschwenkt wird. Hierdurch kann beim Verstellen der Tischeinrichtung zwischen der Verstaustellung und der wenigstens einen Gebrauchsstellung die Tischplatteneinrichtung relativ zu der Halteeinrichtung unverstellt und hierdurch von oben auf einen Schoß eines Fahrzeuginsassen des Fahrzeugs aufverschwenkt werden. In der Verstaustellung kann die Tischeinrichtung als Abdeckung der Mittelkonsole genutzt werden .

In einer weiteren Ausgestaltung der Erfindung ist es vorgesehen, dass die Tischplatteneinrichtung eine die Tischfläche in der wenigstens einen Gebrauchsstellung bereitstellende Tischplatte und ein Halterungselement umfasst, wobei das Halterungselement an dem Stützelement um die erste Schwenkachse schwenkbar gehalten ist. Die Tischplatte ist dazu eingerichtet, relativ zu dem Halterungselement um eine Klappachse geklappt zu werden. Das bedeutet, dass mittels des Stützelements die Tischplatteneinrichtung von der Halteeinrichtung weg verschwenkt, insbesondere zu dem Fahrzeuginsassen des Fahrzeugs hin verschwenkt, werden kann. Für ein Bereitstellen der Tischfläche für den Fahrzeuginsassen wird die Tischplatte relativ zu dem Halterungselement um die Klappachse geklappt, insbesondere zu dem Fahrzeuginsassen hin. Dass die Tischplatteneinrichtung das Halterungselement und die relativ zu dem Halterungselement um die Klappachse klappbare Tischplatte umfasst, ermöglicht, dass die Tischplatte beim Verstellen der Tischeinrichtung zwischen der Verstaustellung und der wenigstens einen Gebrauchsstellung sowohl um die erste Schwenkachse als auch um die zweite Schwenkachse verschwenkt werden kann und zusätzlich über die Klappachse geklappt werden kann. Hierdurch kann eine besonders komplexe Geometrie einer Bewegung der Tischplatte beim Verstellen der Tischeinrichtung zwischen der Verstaustellung und der wenigstens einen Gebrauchsstellung dargestellt werden. Hierdurch kann die Tischplatte beim Verstellen der Tischeinrichtung zwischen der Verstaustellung und der Gebrauchsstellung besonders gut um Fahrzeuginsassen des Fahrzeugs herum bewegt werden, wodurch Fahrzeuginsassen des Fahrzeugs besonders wenig durch die Tischplatte bei deren Verstellung beeinträchtigt werden.

Es ist in weiterer Ausgestaltung der Erfindung vorgesehen, dass die Tischplatte und das Stützelement jeweils Zähne umfassen, welche dazu eingerichtet sind, miteinander eine Verzahnung einzugehen. Über diese Verzahnung kann die Tischplatte relativ zu dem Stützelement in ihrer Ausrichtung fixiert werden. Insbesondere beim Klappen der Tischplatte um die Klappachse können die Zähne der Tischplatte mit den Zähnen des Stützelements in Eingriff gebracht werden, um die Verzahnung auszubilden. Über die Verzahnung kann eine seitliche Verschiebebewegung der Tischplatte relativ zu dem Stützelement unterbunden werden. Weiterhin ermöglicht die Verzahnung ein Halten der Tischplatte relativ zu dem Stützelement in einer vorgegebenen Ausrichtung. Beispielsweise kann die Tischplatte über die Verzahnung in einer Kippstellung relativ zu dem Stützelement gehalten sein. Beispielsweise kann der Fahrzeuginsasse die Tischplatte in unterschiedlichen Kippstellungen um die zweite Schwenkachse relativ zu sich ausrichten, wodurch die Tischplatte ausgehend von der Waagrechten in unterschiedlichen Schrägstellungen angeordnet werden kann. Der Fahrzeuginsasse kann somit die Tischfläche über die Kippstellungen zu sich hin oder von sich weg neigen, wobei die jeweilige Kippstellung über die Verzahnung fixiert werden kann.

In weiterer Ausgestaltung der Erfindung ist es vorgesehen, dass die Tischplatteneinrichtung eine Verschiebeeinrichtung umfasst, welche dazu eingerichtet ist, ein Verschieben der Tischplatte relativ zu dem Halterungselement entlang der Klappachse zu ermöglichen. Hierdurch kann in der wenigstens einen Gebrauchsstellung der Tischeinrichtung der Fahrzeuginsasse die Tischplatte zu sich hin oder von sich weg schieben. Die Verschiebeeinrichtung ermöglicht eine translatorische Verschiebebewegung der Tischplatte relativ zu dem Halterungselement. Folglich ermöglicht die Verschiebeeinrichtung, dass der Fahrzeuginsasse eine Position der Tischplatte relativ zu dem Fahrzeuginsassen besonders gut an seine Bedürfnisse anpassen kann.

In weiterer Ausgestaltung der Erfindung ist es vorgesehen, dass die Verschiebeeinrichtung ein Federelement umfasst, welches dazu eingerichtet ist, nach einem Verschieben der Tischplatte relativ zu dem Halterungselement die Tischplatte mittels Federkraft rückzustellen. Dieses Federelement ist insbesondere dazu eingerichtet, die Tischplatte relativ zu dem Halterungselement mit einer Federkraft zu beaufschlagen, deren Wirkungsrichtung mit einer Verschieberichtung zusammenfällt, entlang welcher die Tischplatte relativ zu dem Halterungselement mittels der Verschiebeeinrichtung verschoben werden kann. Beispielsweise kann die Tischplatte in jeweiligen Verschiebepositionen relativ zu dem Halterungselement über die Verzahnung mit dem Stützelement fixiert werden. Bei einem Lösen der Verzahnung wird die Tischplatte mittels der von dem Federelement bereitgestellten Federkraft rückgestellt. Die Federeinrichtung ermöglicht somit ein besonders einfaches und zuverlässiges Rückstellen der Tischplatte relativ zu dem Halterungselement, wodurch beim Verstellen der Tischeinrichtung aus der wenigstens einen Gebrauchsstellung in die Verstaustellung die Tischplatteneinrichtung besonders präzise und zuverlässig zurückverstellt werden kann, insbesondere verstaut werden kann.

Es ist in einer weiteren Ausgestaltung der Erfindung vorgesehen, dass die Tischeinrichtung eine in einer Führungskulisse des Stützelements geführte Koppelstange umfasst, welche einenends an der Halteeinrichtung und andernends an dem Halterungselement gehalten ist. Hierdurch wird über die Koppelstange in Abhängigkeit von einer Schwenkposition des Stützelements relativ zu der Halteeinrichtung ein Klappen der Tischplatte relativ zu dem Halterungselement ausgelöst. Die Koppelstange ist somit dazu eingerichtet, die jeweilige Schwenkposition des Stützelements mit einer jeweiligen Klappposition der Tischplatte relativ zu dem Halterungselement zu koppeln. Hierdurch ist es ausreichend, dass lediglich eine Verschwenkbewegung der Tischeinrichtung um eine einzige der Schwenkachsen aktiv angetrieben wird, wodurch über die Koppelstange die aktiv angetriebene Verschwenkbewegung auf die zweite Schwenkachse und gegebenenfalls zusätzlich auf die Klappachse weitergeleitet wird, wodurch eine besonders fließende Verstellbewegung der Tischeinrichtung bei deren Verstellung zwischen der Verstaustellung und der wenigstens einen Gebrauchsstellung ermöglicht wird. Die Koppelstange wird insbesondere innerhalb der Führungskulisse relativ zu der Führungskulisse geführt, wenn das Stützelement relativ zu der Halteeinrichtung um die erste Schwenkachse verschwenkt wird. Die Koppelstange kann insbesondere sowohl an dem Halterungselement als auch an der Halteeinrichtung um einen jeweiligen Drehpunkt drehbar befestigt sein. Die Koppelstange ermöglicht somit eine reproduzierbare und komplexe Verstellbewegung der Tischeinrichtung bei deren Verstellung zwischen der Verstaustellung und der wenigstens einen Gebrauchsstellung.

Es ist in einer weiteren Ausgestaltung der Erfindung vorgesehen, dass die Tischeinrichtung eine Federeinrichtung umfasst, welche dazu eingerichtet ist, die Koppelstange mit einer Federkraft zu beaufschlagen. Hierdurch kann eine Bewegung der Koppelstange in der Führungskulisse ausgelöst werden. In der Nähe eines Totpunkts kann sich aufgrund einer Reibung die Koppelstange verklemmen und somit nicht in eine gewünschte Bewegung rutschen. Mittels der Federeinrichtung kann eine gewünschte Erstbewegung herbeigeführt werden, um die Koppelstange aus dem Totpunkt herauszubewegen. Die Federeinrichtung ermöglicht somit ein Überwinden eines Totpunkts der Koppelstange, wodurch in jeder Stellung der Tischeinrichtung eine besonders gute Verstellbarkeit und Bewegbarkeit der Koppelstange innerhalb der Führungskulisse gewährleistet ist.

In einer weiteren Ausgestaltung der Erfindung ist es vorgesehen, dass das Stützelement dazu eingerichtet ist, in der Verstaustellung wenigstens einen Becherhalter bereitzustellen. Das bedeutet, dass das Stützelement in der Verstaustellung der Tischeinrichtung wenigstens eine Aufnahme bereitstellt, welche als Becherhalter dient und in welcher ein Becher sicher abgelegt werden kann. Beispielsweise kann das Stützelement wenigstens eine ringförmige Ausnehmung aufweisen, wobei die ringförmige Ausnehmung in der Verstaustellung der Tischeinrichtung eine den jeweiligen Becherhalter begrenzende Wandung bereitstellt. Insbesondere kann das Stützelement dazu eingerichtet sein, in der Verstaustellung der Tischeinrichtung zumindest im Wesentlichen waagrecht zu dem Fahrzeug bei einer Einbaulage der Tischeinrichtung in dem Fahrzeug ausgerichtet zu sein, sodass sich die beispielsweise zylinderförmige Ausnehmung des Stützelements mit ihrer Mittelachse zumindest im Wesentlichen vertikal zum Fahrzeug erstreckt. Hierdurch kann von oben entlang der Vertikalen der Becher in die Ausnehmung des Stützelements eingesteckt werden, wodurch die die Ausnehmung begrenzende Wandung als Becherhalter wirkt. Das Bereitstellen des wenigstens einen Becherhalters durch das Stützelement in der Verstaustellung der Tischeinrichtung ermöglicht, dass mittels der Tischeinrichtung in jeder Stellung besonders viele Funktionen für den Fahrzeuginsassen bereitgestellt werden können.

In weiterer Ausgestaltung der Erfindung sind zwei Stützelemente vorgesehen, welche jeweils um eine erste Schwenkachse schwenkbar an der Halteeinrichtung gehalten sind und welche jeweils um eine zweite Schwenkachse schwenkbar an der Tischplatteneinrichtung gehalten sind. Hierbei sind die jeweiligen zweiten Schwenkachsen parallel zueinander ausgerichtet und die jeweiligen ersten Schwenkachsen sind parallel zueinander ausgerichtet. Insbesondere sind sämtliche Schwenkachsen, um welche die Stützelemente verschwenkbar sind, parallel zueinander ausgerichtet. Beispielsweise kann die Tischeinrichtung beim Verschwenken zwischen der Verstaustellung und der wenigstens einen Gebrauchsstellung eine z-Form durchlaufen. Die zwei Stützelemente, welche insbesondere parallel zueinander ausgerichtet sind, ermöglichen ein besonders präzises Vorgeben einer Verschwenkbewegung der Tischeinrichtung bei deren Verschwenkung zwischen der Verstaustellung und der wenigstens einen Gebrauchsstellung bei einem besonders einfachen Aufbau der Tischeinrichtung.

In weiterer Ausgestaltung der Erfindung ist es vorgesehen, dass die Tischplatteneinrichtung wenigstens zwei Tischplattenelemente umfasst, welche dazu eingerichtet sind, für ein Vergrößern oder Verkleinern der Tischfläche relativ zueinander um eine dritte Schwenkachse verschwenkt zu werden. Das bedeutet, dass durch ein Aufklappen der beiden Tischelemente die durch die Tischelemente bereitgestellte Tischfläche vergrößert werden kann. Für ein Verkleinern der Tischfläche können die beiden Tischplattenelemente um die dritte Schwenkachse aufeinander geklappt werden. Hierdurch ist die Tischeinrichtung dazu eingerichtet, Tischflächen mit unterschiedlichen Abmessungen, je nach Ausrichtung der wenigstens zwei Tischplattenelemente zueinander, bereitzustellen. Weiterhin kann durch das Zusammenklappen der Tischplattenelemente ein besonders kompaktes Verstauen der Tischeinrichtung in der Verstaustellung ermöglicht werden.

In einer weiteren Ausgestaltung der Erfindung ist es vorgesehen, dass die Halteeinrichtung dazu eingerichtet ist, in einer Mittelkonsole des Fahrzeugs relativ zu der Mittelkonsole verschiebbar gehalten zu werden. Alternativ kann die Halteeinrichtung dazu eingerichtet sein, an einer Fondkonsole des Fahrzeugs relativ zu der Fondkonsole verschiebbar gehalten zu werden. In der Verstaustellung kann die Tischeinrichtung in der Mittelkonsole beziehungsweise in der Fondkonsole verstaut oder seitlich an der Mittelkonsole beziehungsweise an der Fondkonsole anliegend angeordnet sein. Durch die relative Verschiebbarkeit der Tischeinrichtung zu der Mittelkonsole beziehungsweise der Fondkonsole kann der Fahrzeuginsasse einen Abstand der durch die Tischeinrichtung in der wenigstens einen Gebrauchsstellung bereitgestellten Tischfläche zu sich selbst einstellen. Insbesondere kann der Fahrzeuginsasse durch Verschieben der Tischeinrichtung relativ zu der Mittelkonsole die Tischfläche näher zu sich hin oder weiter von sich weg verschieben. Die Verschiebbarkeit der Tischeinrichtung relativ zu der Mittelkonsole beziehungsweise der Fondkonsole ermöglicht besonders viele unterschiedliche Positionen im Fahrzeuginnenraum des Fahrzeugs, in welchen in der wenigstens einen Gebrauchsstellung der Tischeinrichtung die Tischfläche bereitgestellt werden kann.

Weitere Vorteile, Merkmale und Einzelheiten der Erfindung können sich aus der nachfolgenden Beschreibung möglicher Ausführungsbeispiele sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Kurze Figurenbeschreibung

Die Zeichnung zeigt in:
- Fig. 1: eine schematische Perspektivansicht einer ersten Ausführungsform einer Tischeinrichtung für ein Fahrzeug mit einer Tischplatteneinrichtung, welche dazu eingerichtet ist, in einer Gebrauchsstellung der Tischeinrichtung eine Tischfläche für einen Fahrzeuginsassen bereitzustellen sowie mit einer Halteeinrichtung, an welcher die Tischplatteneinrichtung gehalten ist und welche vorliegend an einer Mittelkonsole des Fahrzeugs gehalten ist, wodurch die Tischplatteneinrichtung in einer Verstaustellung der Tischeinrichtung in der Mittelkonsole verstaut werden kann;
- Fig. 2: eine schematische Perspektivansicht der Tischeinrichtung in ihrer ersten Ausführungsform gemäß Fig. 1 in zwei unterschiedlichen Zwischenpositionen während eines Verstellvorgangs der Tischeinrichtung zwischen der Verstaustellung und der wenigstens einen Gebrauchsstellung;
- Fig. 3: eine schematische Perspektivansicht eines Ausschnitts der Tischeinrichtung gemäß Fig. 1, in welchem die Tischplatteneinrichtung über einen geknickten Stift an der Halteeinrichtung und über die Halteeinrichtung an der Mittelkonsole gehalten ist, wobei der geknickte Stift zwei zueinander unterschiedliche Schwenkachsen vorgibt, um welche die Tischplatteneinrichtung für ein Verstellen der Tischeinrichtung zwischen der Verstaustellung und der wenigstens einen Gebrauchsstellung verschwenkt werden kann;

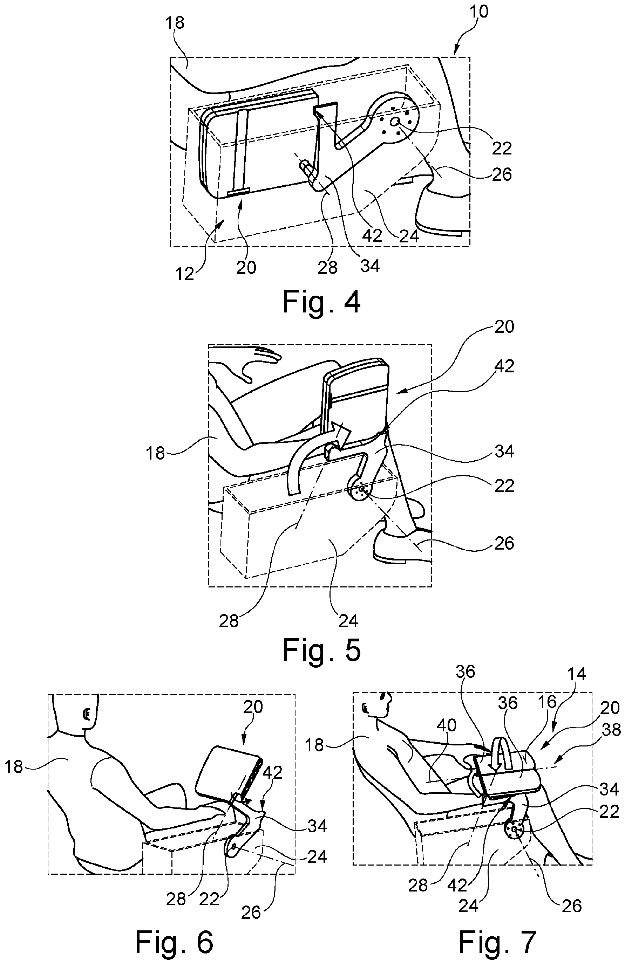

- Fig. 4: eine schematische Perspektivansicht der Tischeinrichtung in einer zweiten Ausführungsform, in welcher die Tischplatteneinrichtung über ein Stützelement an der Halteeinrichtung gehalten ist, wobei das Stützelement die zueinander unterschiedlichen Schwenkachsen vorgibt, um welche die Tischplatteneinrichtung relativ zu der Halteeinrichtung beim Verstellen der Tischeinrichtung zwischen der Verstaustellung und der wenigstens einen Gebrauchsstellung verschwenkt werden kann, wobei die beiden Schwenkachsen schräg zueinander ausgerichtet sind, wobei in dieser Darstellung die Tischeinrichtung in ihrer Verstaustellung gezeigt ist;
- Fig. 5: eine schematische Perspektivansicht der Tischeinrichtung gemäß Fig. 4, wobei die Tischeinrichtung in einer Zwischenstellung gezeigt ist;
- Fig. 6: eine schematische Perspektivansicht der Tischeinrichtung gemäß Fig. 4 in einer möglichen schrägen Gebrauchsstellung zum Lesen oder Fernsehen, wobei diese Gebrauchsstellung erreicht wird, wenn die Tischplatteneinrichtung um die zweiteSchwenkachse gedreht wird, insbesondere aus Sicht des Benutzers gegen den Uhrzeigersinn verschwenkt wird ;
- Fig. 7: eine schematische Perspektivansicht der Tischeinrichtung gemäß Fig. 4 in einer zweiten, ebenen Gebrauchsstellung, welche erreicht wird, wenn die Tischplatteneinrichtung um die zweite Schwenkachse gedreht wird, insbesondere aus Sicht des Benutzers im Uhrzeigersinn verschwenkt wird, in welcher die Tischplatteneinrichtung eine Tischfläche für einen Fahrzeuginsassen des Fahrzeugs bereitstellt, wobei für ein Bereitstellen einer besonders großen Tischfläche zwei aufeinander klappbare Tischplattenelemente der Tischplatteneinrichtung aufgeklappt sind;

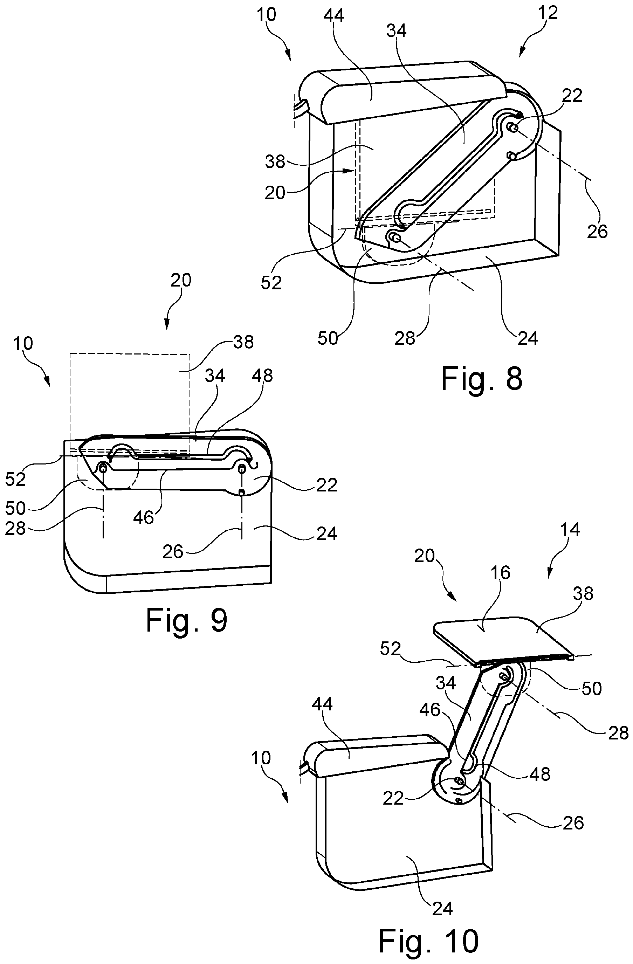

- Fig. 8: eine schematische Perspektivansicht der Tischeinrichtung in einer dritten Ausführungsform, in welcher die Tischplatteneinrichtung über das Stützelement an der Halteeinrichtung gehalten ist, wobei die zwei zueinander unterschiedlichen Schwenkachsen parallel zueinander angeordnet sind und wobei das Stützelement eine Führungskulisse aufweist, in welcher eine einenends an der Tischplatteneinrichtung und andernends an der Halteeinrichtung gehaltene Koppelstange geführt ist, wodurch eine Verschwenkbewegung des Stützelements relativ zu der Halteeinrichtung um eine erste Schwenkachse mit einer Verschwenkbewegung der Tischplatteneinrichtung relativ zu dem Stützelement um eine zweite Schwenkachse gekoppelt ist, wobei die Tischeinrichtung in der Verstaustellung dargestellt ist;
- Fig. 9: eine schematische Perspektivansicht der Tischeinrichtung gemäß Fig. 8 in einer Zwischenstellung;
- Fig. 10: eine schematische Perspektivansicht der Tischeinrichtung gemäß Fig. 8 in der Gebrauchsstellung, in welcher die Tischplatteneinrichtung relativ zu dem Stützelement im Vergleich zur Verstaustellung um eine Klappachse geklappt ist;
- Fig. 11: eine schematische Draufsicht auf das Stützelement der Tischeinrichtung in ihrer dritten Ausführungsform, wobei eine Federeinrichtung vorgesehen ist, mittels welcher die Koppelstange relativ zu der Führungskulisse mit einer Federkraft beaufschlagbar ist;

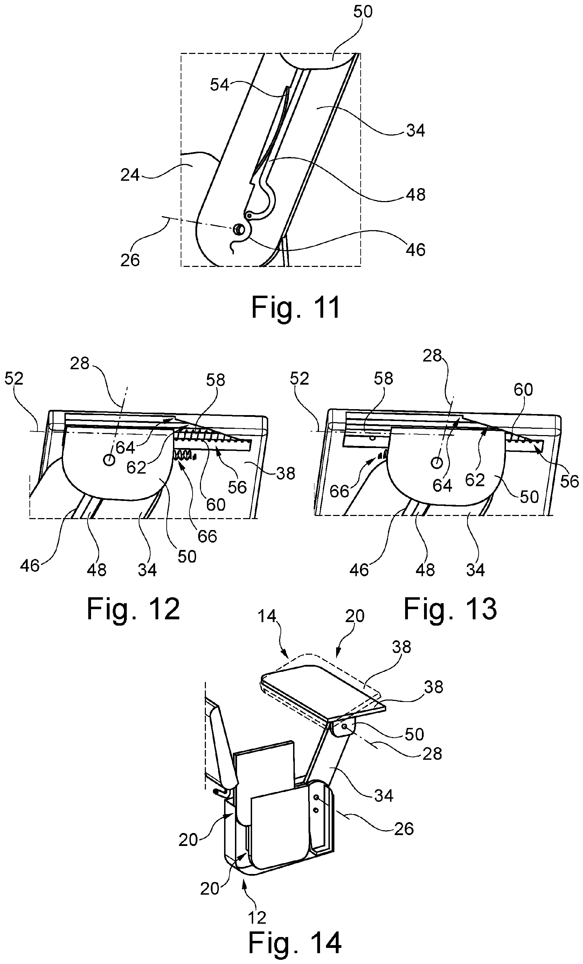

- Fig. 12: eine schematische Perspektivansicht eines Ausschnitts der Tischplatteneinrichtung der Tischeinrichtung in ihrer dritten Ausführungsform, wobei die Tischplatteneinrichtung eine die Tischfläche in der wenigstens einen Gebrauchsstellung bereitstellende Tischplatte sowie ein Halterungselement umfasst, wobei die Tischplatte über das Halterungselement an dem Stützelement gehalten ist und wobei eine Verschiebeeinrichtung mit einer Feder vorgesehen ist, über welche die Tischplatte relativ zu dem Halterungselement entlang der Klappachse, um welche die Tischplatte relativ zu dem Halterungselement geklappt werden kann, verschoben werden kann;
- Fig. 13: eine schematische Perspektivansicht des Ausschnitts der Tischplatteneinrichtung gemäß Fig. 12, wobei das Tischplattenelement relativ zu dem Halterungselement über die Verschiebeeinrichtung entlang der Klappachse verschoben ist im Vergleich zu der Darstellung in Fig. 12;
- Fig. 14: eine schematische Perspektivansicht der Tischeinrichtung in ihrer dritten Ausführungsform, wobei die Tischplatte in unterschiedlichen Kippstellungen um die zweite Schwenkachse relativ zu dem Stützelement gekippt gezeigt ist;
- Fig. 15: eine schematische Perspektivansicht des Ausschnitts der Tischplatteneinrichtung in der dritten Ausführungsform der Tischeinrichtung, wobei sowohl das Stützelement als auch die Tischplatte mehrere Zähne aufweisen, welche beabstandet voneinander dargestellt sind;
- Fig. 16: eine schematische Perspektivansicht des Ausschnitts der Tischplatteneinrichtung gemäß Fig. 15, wobei die Zähne der Tischplatte mit den Zähnen des Stützelements in Eingriff gebracht sind, wodurch die Tischplatte mit dem Stützelement verzahnt ist;
- Fig. 17: eine schematische Perspektivansicht des Stützelements gemäß Fig. 15, wobei die Zähne des Stützelements erkannt werden können;
- Fig. 18: eine schematische Perspektivansicht eines Ausschnitts der Tischplatteneinrichtung in der wenigstens einen Gebrauchsstellung der Tischeinrichtung, wobei die Tischplatte in ihrer Klappstellung um die Klappachse relativ zu dem Stützelement sowie relativ zu dem Halteelement über jeweilige Anschläge fixiert ist;
- Fig. 19: ein Verfahrensschema für einen Verstellvorgang der Tischeinrichtung in einer vierten Ausführungsform aus der Verstaustellung in die wenigstens eine Gebrauchsstellung, bei welcher an dem Halterungselement ein Schlitten angeordnet ist, welcher in einer Führungskulisse des Stützelements geführt werden kann, wodurch über ein einenends an dem Schlitten und anderenends an dem Tischplattenelement gehaltenes Verbindungselement die Tischplatte bei einem Verstellen der Tischplatteneinrichtung um die zweite Schwenkachse relativ zu dem Stützelement um die Klappachse geklappt werden kann;
- Fig. 20: eine schematische Draufsicht auf einen Ausschnitt der Stützeinrichtung, mit zwei zueinander unterschiedlichen gekrümmten, zumindest im Wesentlichen kreissegmentförmigen Führungskulissen;
- Fig. 21: eine schematische Perspektivansicht eines Ausschnitts der Tischplatteneinrichtung in ihrem an dem Stützelement gehaltenen Bereich, wobei das Verbindungselement sowie der Schlitten gezeigt sind;
- Fig. 22: eine schematische Perspektivansicht eines Ausschnitts der Tischplatteneinrichtung gemäß Fig. 21, wobei die Tischplatte relativ zu dem Halterungselement in einer Ausgangsstellung, welche der Verstaustellung der Tischeinrichtung zugeordnet ist, relativ zu dem Halterungselement angeordnet ist;
- Fig. 23: eine schematische Perspektivansicht der Tischeinrichtung in einer fünften Ausführungsform, in welcher die Tischplatteneinrichtung über das Stützelement an der Halteeinrichtung gehalten ist, wobei das Stützelement dazu eingerichtet ist, in der Gebrauchsstellung der Tischeinrichtung zwei Becherhalter bereitzustellen, wobei die Tischeinrichtung in der Verstaustellung gezeigt ist;
- Fig. 24: eine schematische Perspektivansicht der Tischeinrichtung gemäß Fig. 23 in einer Zwischenstellung;
- Fig. 25: eine schematische Perspektivansicht der Tischeinrichtung gemäß Fig. 23 in der Gebrauchsstellung, wobei zwei Tischplattenelemente der Tischplatteneinrichtung aufgeklappt angeordnet sind, um die Tischfläche bereitzustellen;

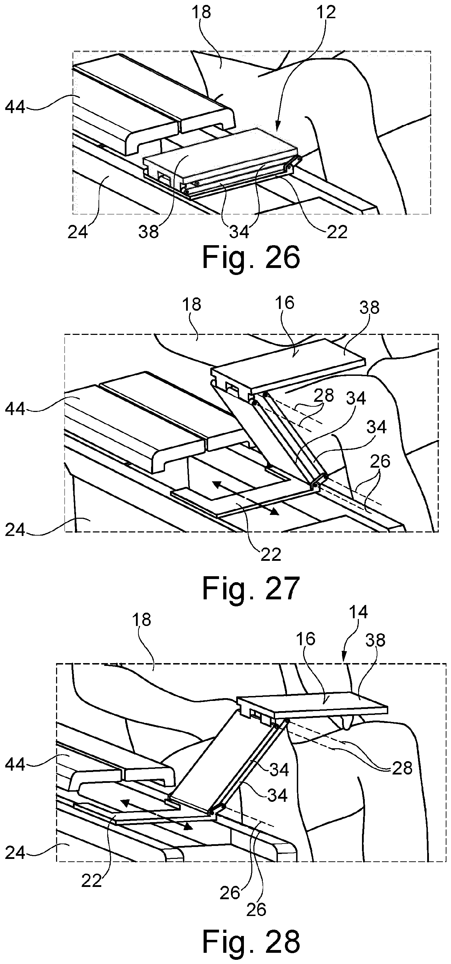

- Fig. 26: eine schematische Perspektivansicht der Tischeinrichtung in einer sechsten Ausführungsform, in welcher die Tischplatteneinrichtung über zwei zueinander parallel angeordnete Stützelemente an der Halteeinrichtung gehalten ist, wobei für jedes Stützelement jeweils eine erste Schwenkachse und jeweils eine zweite Schwenkachse vorgesehen sind, um welche das Stützelement relativ zu der Tischplatteneinrichtung beziehungsweise relativ zu der Halteeinrichtung verschwenkt werden kann, wobei sämtliche Schwenkachsen parallel zueinander ausgerichtet sind, wobei die Halteeinrichtung dazu eingerichtet ist, relativ zu der Mittelkonsole, an welcher die Halteeinrichtung gehalten ist, translatorisch verschoben zu werden, wobei die Tischeinrichtung in der Verstaustellung gezeigt ist;
- Fig. 27: eine schematische Perspektivansicht der Tischeinrichtung gemäß Fig. 26 in einer Zwischenstellung; und
- Fig. 28: eine schematische Perspektivansicht der Tischeinrichtung gemäß Fig. 26, wobei die Tischeinrichtung in der wenigstens einen Gebrauchsstellung angeordnet ist.

Funktionsgleichen Elementen sind in den Figuren gleiche Bezugszeichen zugeordnet.

In den Figuren sind unterschiedliche Ausführungsformen jeweiliger Tischeinrichtungen 10 für ein Fahrzeug gezeigt. Diese Tischeinrichtungen 10 können insbesondere in Kraftfahrzeugen, insbesondere in Kraftwagen, insbesondere in Personenkraftwagen eingesetzt werden. Die Tischeinrichtung 10 kann alternativ in einem Zug oder Flugzeug als Fahrzeug eingesetzt werden. Jede dieser Tischeinrichtungen 10 ist dazu eingerichtet, zwischen einer Verstaustellung 12 und wenigstens einer Gebrauchsstellung 14 verstellt zu werden. In der Gebrauchsstellung 14 ist die Tischeinrichtung 10 dazu eingerichtet, eine Tischfläche 16 für einen Fahrzeuginsassen 18 bereitzustellen. Die Tischeinrichtung 10 umfasst weiterhin in jeder Ausführungsform eine Tischplatteneinrichtung 20 sowie eine Halteeinrichtung 22, an welcher die Tischplatteneinrichtung 20 zumindest mittelbar gehalten ist. Die Tischplatteneinrichtung 20 ist dazu eingerichtet, in der wenigstens einen Gebrauchsstellung 14 der Tischeinrichtung 10 die Tischfläche 16 bereitzustellen. Über die Halteeinrichtung 22 kann die Tischeinrichtung 10 im Innenraum des Fahrzeugs befestigt werden. Hierfür kann die Halteeinrichtung 22, wie in den Fig. gezeigt ist, an einer Mittelkonsole 24 des Fahrzeugs befestigt sein. In der Verstaustellung 12 der Tischeinrichtung 10 kann die Tischplatteneinrichtung 20 vollständig in der Mittelkonsole 24 aufgenommen und somit verstaut sein. Die Tischplatteneinrichtung 20 kann in der Verstaustellung 12 der Tischeinrichtung 10 in einer Türkonsole oder in einer Fahrzeugwand alternativ verstaut sein. Alternativ kann die Tischplatteneinrichtung 20 in der Verstaustellung 12 der Tischeinrichtung 10 seitlich an der Mittelkonsole 24 anliegen.

In jeder Ausführungsform der Tischeinrichtung 10 ist es vorgesehen, dass beim Verstellen der Tischeinrichtung 10 zwischen der Verstaustellung 12 und der wenigstens einen Gebrauchsstellung 14 die Tischplatteneinrichtung 20 relativ zu der Halteeinrichtung 22 um wenigstens zwei zueinander unterschiedliche Schwenkachsen 26, 28 verschwenkt wird. Diese beiden Schwenkachsen 26, 28 können schräg zueinander oder parallel zueinander ausgerichtet sein.

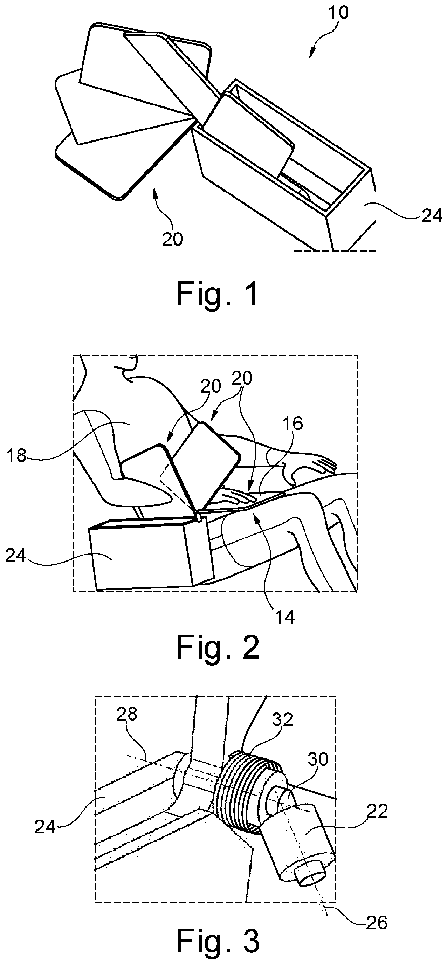

In den Fig. 1 bis 3 ist die Tischeinrichtung 10 in einer ersten Ausführungsform dargestellt. Bei dieser ersten Ausführungsform sind die Schwenkachsen 26, 28, wie in Fig. 3 erkannt werden kann, schräg zueinander ausgerichtet. Hierbei umfasst die Tischeinrichtung 10 einen geknickten Stift 30, durch welchen sowohl die erste Schwenkachse 26 als auch die zweite Schwenkachse 28 vorgegeben sind. Dieser geknickte Stift 30 ist um die erste Schwenkachse 26 drehbar an der Halteeinrichtung 22 gehalten. Weiterhin ist der geknickte Stift 30 um die zweite Schwenkachse 28 relativ zu der Tischplatteneinrichtung 20 drehbar an der Tischplatteneinrichtung 20 gehalten. Folglich gibt der geknickte Stift 30, wie in Fig. 3 erkannt werden kann, die beiden Schwenkachsen 26, 28 für die Tischplatteneinrichtung 20 vor, um welche die Tischplatteneinrichtung 20 beim Verstellen der Tischeinrichtung 10 zwischen der Verstaustellung 12 und der Gebrauchsstellung 14 verschwenkt wird.

In Fig. 1 ist diese erste Ausführungsform der Tischeinrichtung 10 in unterschiedlichen Zwischenpositionen bei einem Verstellvorgang der Tischeinrichtung 10 zwischen der Verstaustellung 12 und der wenigstens einen Gebrauchsstellung 14 gezeigt. Hierbei wird die Tischplatteneinrichtung 20 beim Verstellen der Tischeinrichtung 10 aus der Verstaustellung 12 in die wenigstens eine Gebrauchsstellung 14 zuerst um die zweite Schwenkachse 28 senkrecht aus der Mittelkonsole 24 heraus verschwenkt und anschließend um die erste Schwenkachse 26 zur Seite hin verschwenkt, um in einer Einbaulage der Tischeinrichtung 10 in dem Fahrzeug die Tischfläche 16 für den Fahrzeuginsassen 18 bereitzustellen. In Fig. 2 ist die Tischeinrichtung 10 in der ersten Ausführungsform in mehreren Zwischenstellungen sowie in der Gebrauchsstellung 14 relativ zu dem Fahrzeuginsassen 18 gezeigt.

Die Verschwenkbewegung der Tischplatteneinrichtung 20 um die zweite Schwenkachse 28 relativ zu der Halteeinrichtung 22 kann durch eine erste Federeinrichtung 32 ausgelöst werden. Mit anderen Worten kann die Tischplatteneinrichtung 20 von der ersten Federeinrichtung 32 um die zweite Schwenkachse 28 verschwenkt werden. Mittels dieser ersten Federeinrichtung 32 kann die Tischplatteneinrichtung 20 beispielsweise um 135 Grad um die zweite Schwenkachse 28 verschwenkt werden. Bei einer Verschwenkbewegung der Tischeinrichtung 10 aus der Verstaustellung 12 in die wenigstens eine Gebrauchsstellung 14 sorgt somit die erste Federeinrichtung 32 dafür, dass die Tischplatteneinrichtung 20 um die ersten 135 Grad um die zweite Schwenkachse 28 verschwenkt wird, wodurch sichergestellt wird, dass die Tischplatteneinrichtung 20 zuerst um die zweite Schwenkachse 28 und anschließend um die erste Schwenkachse 26 verschwenkt wird.

Die erste Ausführungsform der Tischeinrichtung 10 ermöglicht, dass die Tischplatteneinrichtung 20 angenehm weit von dem Fahrzeuginsassen 18 weg dreht. Um eine für den Fahrzeuginsassen 18 zu tiefe Anordnung der Tischfläche 16 zu vermeiden, kann die Mittelkonsole 24 zumindest im Bereich der an der Mittelkonsole 24 gehaltenen Halteeinrichtung 22 besonders hoch ausgestaltet sein. Hierdurch kann ein Drehpunkt, um welchen die Tischplatteneinrichtung 20 gedreht wird, besonders hoch an der Mittelkonsole 24 angeordnet sein. Beim Verschwenken der Tischplatteneinrichtung 20 um die erste Schwenkachse 26 kann die Tischplatteneinrichtung 20 über dem Schwerpunkt gedämpft herunterfahren.

In den Fig. 4 bis 7 ist die Tischeinrichtung 10 in einer zweiten Ausführungsform dargestellt. In dieser zweiten Ausführungsform umfasst die Tischeinrichtung 10 ein Stützelement 34. Das Stützelement 34 ist um die erste Schwenkachse 26 schwenkbar an der Halteeinrichtung 22 gehalten. An dem Stützelement 34 ist die Tischplatteneinrichtung 20 um die zweite Schwenkachse 28 schwenkbar gehalten. Das bedeutet, dass die Tischplatteneinrichtung 20 über das Stützelement 34 um die erste Schwenkachse 26 und um die zweite Schwenkachse 28 schwenkbar an der Halteeinrichtung 22 gehalten ist. In dieser zweiten Ausführungsform der Tischeinrichtung 10 sind die erste Schwenkachse 26 und die zweite Schwenkachse 28 ebenfalls schräg zueinander ausgerichtet. In Fig. 4 ist die Tischeinrichtung 10 in der zweiten Ausführungsform in der Verstaustellung 12 gezeigt, in welcher das Stützelement 34 und die Tischplatteneinrichtung 20 vollständig in der Mittelkonsole 24 aufgenommen sind. In Fig. 5 ist die Tischeinrichtung 10 in einer Zwischenstellung beim Verschwenken der Tischeinrichtung 10 aus der Verstaustellung 12 in die wenigstens eine Gebrauchsstellung 14 gezeigt. Hierbei kann die Tischplatteneinrichtung 20 gemeinsam mit dem Stützelement 34 um die erste Schwenkachse 26 ausgehend von der Verstaustellung 12 aus der Mittelkonsole 24 senkrecht heraus verschwenkt werden. In Fig. 6 ist die Tischeinrichtung 10 in einer schrägen Gebrauchstellung zum Lesen und Fernsehen gezeigt. Hierfür sind die Tischplatteneinrichtung 20 und das Stützelement 34 um die erste Schwenkachse 26 aus der Mittelkonsole 24 heraus verschwenkt, wobei zusätzlich die Tischplatteneinrichtung 20 relativ zu dem Stützelement 34 um die zweite Schwenkachse 28 aus Sicht des Benutzers gegen den Uhrzeigersinn verschwenkt ist im Vergleich zur Zwischenstellung aus Fig. 5.

In Fig. 7 ist die Tischeinrichtung 10 in der wenigstens einen Gebrauchsstellung 14 gezeigt, in welcher die Tischplatteneinrichtung 20 die Tischfläche 16 für den Fahrzeuginsassen 18 bereitstellt. Hierzu wurden die Tischplatteneinrichtung 20 und das Stützelement 34 um die erste Schwenkachse 26 aus der Mittelkonsole 24 verschwenkt und anschließend die Tischplatteneinrichtung 20 um die zweite Schwenkachse 28 aus Sicht des Benutzers im Uhrzeigersinn verschwenkt. Hierbei kann erkannt werden, dass die Tischplatteneinrichtung 20 eine zwei Tischplattenelemente 36 umfassende Tischplatte 38 aufweist. Die Tischplatte 38 kann insbesondere wenigstens ein Tischplattenelement 36 umfassen. Die Tischplattenelemente 36 sind zueinander um eine dritte Schwenkachse 40 verschwenkbar. Hierdurch können die Tischplattenelemente 36 mit ihren Breitseiten aufeinander geklappt werden oder aufgeklappt und somit nebeneinander angeordnet werden, wodurch die Tischplattenelemente 36 mit ihren Schmalseiten aneinander anliegen. Durch Aufklappen der Tischplattenelemente 36 kann die Tischfläche 16 durch die Tischplatte 38 mit einer besonders großen Erstreckung bereitgestellt werden. Die Tischplatte 38 kann an ihrer Kante oder über ihre Fläche beleuchtet sein. Die Tischplatte 38 kann eine Bildschirmeinrichtung, insbesondere einen Tablet-Computer, umfassen. Die Tischeinrichtung 10, insbesondere die Tischplatte 38, kann eine kabellose Ladefunktion für ein mobiles elektronisches Endgerät, insbesondere ein Smartphone, enthalten.

Wie in den Fig. 4 und 5 erkannt werden kann, kann das Stützelement 34 einen ersten Anschlag 42 aufweisen, welcher von einem Befestigungspunkt, an welchem die Tischplatteneinrichtung 20 um die zweite Schwenkachse 28 drehbar an dem Stützelement 34 gehalten ist, beabstandet ist. Dieser erste Anschlag 42 kann, wie in den Fig. 4 und 5 erkannt werden kann, dazu eingerichtet sein, eine Lage der Tischplatteneinrichtung 20 um die zweite Schwenkachse 28 relativ zu dem Stützelement 34 vorzugeben, wodurch ein sicheres Ein- und Ausverschwenken der Tischplatteneinrichtung 20 aus der Mittelkonsole 24 ermöglicht wird. Weiterhin kann der erste Anschlag 42 dazu dienen, die Tischplatteneinrichtung 20 in der Gebrauchsstellung 14 zu stabilisieren, wie in Fig. 7 erkannt werden kann. Hierbei kann die Tischplatteneinrichtung 20 in der Gebrauchsstellung 14 auf dem ersten Anschlag 42 des Stützelements 34 abgelegt werden. Hierdurch kann die Tischfläche 16 mit besonders großer Stabilität bereitgestellt werden.

Durch die schräge Ausrichtung der zweiten Schwenkachse 28 relativ zu der ersten Schwenkachse 26 können je nach Schwenkrichtung der Tischplatteneinrichtung 20 um die zweite Schwenkachse 28 relativ zu dem Stützelement 34 unterschiedliche Gebrauchsstellungen 14 der Tischeinrichtung 10 eingenommen werden. Insbesondere kann der Fahrzeuginsasse 18 ein Halten der Tischplatteneinrichtung 20 in der in Fig. 6 gezeigten Zwischenposition auslösen, um beispielsweise ein Buch oder eine Bildschirmeinrichtung auf einer Oberfläche der Tischplatteneinrichtung 20 ablegen zu können, wobei das Buch beziehungsweise die Bildschirmeinrichtung aufgrund der schrägen Ausrichtung der Oberfläche der Tischplatteneinrichtung 20 im Raum eine gute Lese- oder Bildschirmlage ermöglicht. Bei dieser in Fig. 6 gezeigten Zwischenstellung kann es sich alternativ um eine Endstellung der Tischeinrichtung 10 handeln.

Durch die schräge Ausrichtung der zweiten Schwenkachse 28 relativ zu der ersten Schwenkachse 26 können unterschiedliche Tischlagen, insbesondere zumindest zwei Tischlagen, der Tischplatteneinrichtung 20 umgesetzt werden. Für ein Einstellen der jeweiligen Tischlagen kann die Tischeinrichtung 10 zwei Antriebseinrichtungen umfassen, wobei jede Antriebseinrichtung dazu eingerichtet ist, die Tischplatteneinrichtung 20 in einer zu der jeweils anderen Antriebseinrichtung entgegengesetzten Richtung um die zweite Schwenkachse 28 zu verschwenken. Die jeweilige Antriebseinrichtung kann insbesondere einen Getriebemotor aufweisen. Alternativ oder zusätzlich kann die Verstellbarkeit der Tischplatteneinrichtung 20 um die zweite Schwenkachse 28 mittels wenigstens einer Gasdruckfeder ermöglicht werden. Um die Tischfläche 16 in der Gebrauchsstellung 14 der Tischeinrichtung 10 zu kippen, kann der Fahrzeuginsasse 18 die Tischplatteneinrichtung 20 gemeinsam mit dem Stützelement 34 um die erste Schwenkachse 26 relativ zu der Halteeinrichtung 22 kippen.

In den Fig. 8 bis 10 ist die Tischeinrichtung 10 in einer dritten Ausführungsform gezeigt. In dieser dritten Ausführungsform ist die Tischplatteneinrichtung 20 über das Stützelement 34 an der Halteeinrichtung 22 gehalten. Die erste Schwenkachse 26 und die zweite Schwenkachse 28 sind bei der dritten Ausführungsform der Tischeinrichtung 10 parallel zueinander ausgerichtet. In den Fig. 8 bis 10 ist ein Verstellvorgang der Tischeinrichtung 10 in ihrer dritten Ausführungsform von der in Fig. 8 gezeigten Verstaustellung 12 in die in Fig. 10 gezeigte Gebrauchsstellung 14 dargestellt. In Fig. 9 ist die Tischeinrichtung 10 in einer Zwischenstellung gezeigt. In der Verstaustellung 12 ist, wie in Fig. 8 erkannt werden kann, die gesamte Tischeinrichtung 10 in einer geschlossenen Aufnahme der Mittelkonsole 24 aufgenommen. Hierbei kann die Aufnahme der Mittelkonsole 24 durch ein Deckelelement 44 verschlossen sein. Dieses Deckelelement 44 kann als Armauflage dienen. Um ein Herausschwenken der Tischplatteneinrichtung 20 aus der Aufnahme der Mittelkonsole 24 zu ermöglichen, wird das Deckelelement 44 von der Aufnahme gelöst, insbesondere aufgeschwenkt.

Wie in den Fig. 8 bis 10 erkannt werden kann, ist die Verschwenkbewegung des Stützelements 34 um die erste Schwenkachse 26 relativ zu der Halteeinrichtung 22 mit der Verschwenkbewegung der Tischplatteneinrichtung 20 um die zweite Schwenkachse 28 relativ zu dem Stützelement 34 gekoppelt. Das bedeutet, dass gleichzeitig die Tischplatteneinrichtung 20 relativ zu dem Stützelement 34 um die zweite Schwenkachse 28 verschwenkt wird, wie das Stützelement 34 um die erste Schwenkachse 26 relativ zu der Halteeinrichtung 22 verschwenkt wird. Für ein Koppeln dieser Verschwenkbewegungen weist das Stützelement 34 eine Führungskulisse 46 auf, in welcher eine Koppelstange 48 geführt ist. Diese Koppelstange 48 ist einenends um einen Ankerpunkt drehbar an der Halteeinrichtung 22 fixiert und andernends um einen weiteren Ankerpunkt drehbar an der Tischplatteneinrichtung 20 fixiert. Eine Drehbewegung des Stützelements 34 um die erste Schwenkachse 26 relativ zu der Halteeinrichtung 22 resultiert somit in einer Drehbewegung der Tischplatteneinrichtung 20 um die zweite Schwenkachse 28 relativ zu dem Stützelement 34 über die Koppelstange 48. Sowohl die Führungskulisse 46 als auch die Koppelstange 48 weisen mit ihrer Kontur jeweils einen geraden Mittelteil sowie jeweils halbkreisförmige Endabschnitte auf, wobei die halbkreisförmigen Endabschnitte mit ihrer Öffnung jeweils in dieselbe Richtung ausgerichtet sind. Hierbei ist die Führungskulisse 46 länger ausgestaltet als die Koppelstange 48, insbesondere um eine Länge eines der halbkreisförmigen Endabschnitte. Die Koppelstange 48 kann somit beim Verstellen der Tischeinrichtung 10 zwischen der Verstaustellung 12 und der wenigstens einen Gebrauchsstellung 14 jeweils im Halbkreis um die Schwenkachsen 26, 28 geführt werden. Hierfür sind die jeweiligen halbkreisförmigen Endabschnitte der Führungskontur um die Schwenkachsen 26, 28 herum angeordnet, sodass die Schwenkachsen 26, 28 jeweils in einem Kreismittelpunkt der halbkreisförmigen Endabschnitte der Führungskulisse 46 angeordnet sind.

In der dritten Ausführungsform der Tischeinrichtung 10 umfasst die Tischplatteneinrichtung 20 die Tischplatte 38 sowie ein Halterungselement 50. Über das Halterungselement 50 ist die Tischplatte 38 an dem Stützelement 34 gehalten. Vorliegend ist die Koppelstange 48 üben den weiteren Ankerpunkt an dem Halterungselement 50 drehbar gehalten. Die Tischplatte 38 ist um eine Klappachse 52 relativ zu dem Halterungselement 50 klappbar. Durch das Klappen der Tischplatte 38 um die Klappachse 52 relativ zu dem Halterungselement 50 kann die Tischfläche 16 in Einbaulage der Tischeinrichtung 10 in dem Fahrzeug relativ zu dem Fahrzeug zumindest im Wesentlichen waagrecht ausgerichtet werden. Die Klappachse 52 ist vorliegend schräg, insbesondere senkrecht zu der ersten Schwenkachse 26 und der zweiten Schwenkachse 28 ausgerichtet. In Fig. 4 ist das Stützelement 34 detaillierter gezeigt. Bei dieser Variante der dritten Ausführungsform ist eine zweite Federeinrichtung 54 vorgesehen, welche dazu eingerichtet ist, die Koppelstange 48 mit einer Federkraft zu beaufschlagen. Durch Beaufschlagen der Koppelstange 48 mit der Federkraft durch die zweite Federeinrichtung 54 kann eine Bewegung der Koppelstange 48 in der Führungskulisse 46 ausgelöst werden. Vorliegend umfasst die zweite Federeinrichtung 54 eine Blattfeder.

Die Koppelstange 48 ist dazu eingerichtet, ein durch die zweite Schwenkachse 28 vorgegebenes Drehgelenk in gewünschter Winkellage zu einem durch die erste Schwenkachse 26 vorgegebenen ersten Drehgelenk zu halten beziehungsweise zu bewegen. Hierdurch erleichtert die Koppelstange 48 ein Einklappen der Tischplatteneinrichtung 20 in der Mittelkonsole 24. Weiterhin wird durch die Koppelstange 48 ein automatisches Ausfahren der Tischplatteneinrichtung 20 und somit ein automatisches Verstellen der Tischeinrichtung 10 aus der Verstaustellung 12 in die wenigstens eine Gebrauchsstellung 14 ermöglicht. In der Nähe eines Totpunkts kann sich aufgrund einer Reibung die Koppelstange 48 verklemmen und somit nicht in eine gewünschte Bewegung rutschen. Eine nötige Erstbewegung kann von der zweiten Federeinrichtung 54 herbeigeführt werden. Somit kann die zweite Federeinrichtung 54 die Koppelstange 48 unterstützen, aus einer Totlage herauszukommen. Ein Abstand der Koppelstange 48 von dem ersten Ankerpunkt zu dem weiteren Ankerpunkt entspricht zumindest im Wesentlichen einem Abstand der ersten Schwenkachse 26 zu der zweiten Schwenkachse 28. Die Ankerpunkte sind mit den Schwenkachsen 26, 28 als jeweilige Eckpunkte eines Parallelogramms darstellend angeordnet. Während einer Verschwenkbewegung des Stützelements 34 beim Verstellen der Tischeinrichtung 10 zwischen der Verstaustellung 12 und der wenigstens einen Gebrauchsstellung 14 ermöglicht die Koppelstange 48, dass eine Ausrichtung des Halterungselements 50 um die zweite Schwenkachse 28 relativ zu der Halteeinrichtung 22 beziehungsweise relativ zu einer Umgebung der Tischeinrichtung 10 unverändert gehalten wird.

In einer stabilen Lage der Koppelstange 48 relativ zu der Führungskulisse 46 ist ein Abstand zwischen dem geraden Mittelabschnitt der Koppelstange 48 zu dem geraden Mittelabschnitt der Führungskulisse 46 groß. Je kleiner der Abstand zwischen dem geraden Mittelabschnitt der Koppelstange 48 zu dem geraden Mittelabschnitt der Führungskulisse 46 wird, desto instabiler wird die Lage der Koppelstange 48. Das bedeutet, dass, wenn Kraft aufgewendet wird, die Tischplatteneinrichtung 20 relativ zu dem Stützelement 34 um die zweite Schwenkachse 28 gekippt werden kann. Dies kann ausgenutzt werden, um eine zusätzliche Kippfunktion in der Gebrauchsstellung 14 bereitzustellen. Eine weitere instabile Lage der Koppelstange 48 kann im vollständig eingeschwenkten Zustand der Tischplatteneinrichtung 20 und somit in der Verstaustellung 12 der Tischeinrichtung 10 auftreten, ein Kippen der Tischplatteneinrichtung 20 relativ zu dem Stützelement 34 wird jedoch aufgrund des Bauraums, insbesondere der Anordnung der Tischeinrichtung 10 in der Mittelkonsole 24, vermieden. Das Kippen der Tischplatteneinrichtung 20 relativ zu dem Stützelement 34 nahe eines Totpunkts der Koppelstange 48 und somit in einer besonders instabilen Lage der Koppelstange 48 ist in Fig. 14 gezeigt. Hierbei ist zusätzlich ein Verschwenkvorgang der Tischeinrichtung 10 aus der Verstaustellung 12 in die wenigstens eine Gebrauchsstellung 14 angedeutet. Nahe des Totpunkts der Koppelstange 48 kann im Bereich einer elastischen Verformung der Koppelstange 48 ein Kippen der Tischplatte 38 relativ zu dem Stützelement 34 um die zweite Schwenkachse 28 um 20 Grad ermöglicht werden. Bei einem Einklappen der Tischeinrichtung 10 ist die Koppelstange 48 nicht mehr im Bereich des Totpunkts, wodurch Winkel der Tischeinrichtung 10 stabil sind.

In den Fig. 12 und 13 ist die Anbindung der Tischplatte 38 an das Halterungselement 50 gezeigt, wobei es sich hierbei um eine optionale Variante der dritten Ausführungsform der Tischeinrichtung 10 handelt. Hierbei kann erkannt werden, dass die Tischplatteneinrichtung 20 eine Verschiebeeinrichtung 56 umfasst, welche dazu eingerichtet ist, ein Verschieben der Tischplatte 38 relativ zu dem Halterungselement 50 entlang der Klappachse 52 zu ermöglichen. Die Verschiebeeinrichtung 56 umfasst eine Stange, welche relativ zu der Tischplatte 38 fixiert ist und deren Mittelachse mit der Klappachse 52 zusammenfällt. Auf diese Stange 58 ist das Halterungselement 50 aufgesteckt, wodurch das Halterungselement 50 entlang der Stange 58 relativ zu der Tischplatte 38 verschoben werden kann. Die Verschiebeeinrichtung 56 ermöglicht, dass der Fahrzeuginsasse 18 die Tischplatte 38 näher zu sich hin oder weiter von sich weg schieben kann. Um ein Rückstellen der Tischplatte 38 in deren Ausgangsposition relativ zu dem Halterungselement 50 entlang der Klappachse 52 zu ermöglichen, umfasst die Verschiebeeinrichtung 56 eine dritte Federeinrichtung 60. Eine Feder der dritten Federeinrichtung 60 ist um die Stange 58 herumgewunden. Um die Tischplatte 38 relativ zu dem Halterungselement 50 entlang der Klappachse 52 verschieben zu können, ist somit die Feder der dritten Federeinrichtung 60 zu stauchen, wodurch Federkraft in der Federeinrichtung 60 eingespeichert wird. Unter Freigabe der in der dritten Federeinrichtung 60 gespeicherten Federkraft wird die Tischplatte 38 relativ zu dem Halterungselement 50 rückgestellt. Die Feder der dritten Federeinrichtung 60 ist einenends gegen die Tischplatte 38 und andernends gegen das Halterungselement 50 abgestützt. Die Klappachse 52 wird somit nicht nur zum Kippen der Tischplatte 38 relativ zu dem Halterungselement 50 genutzt, sondern kann zusätzlich eine Verschiebefunktion übernehmen.

Um ein zuverlässiges Rückklappen der Tischplatte 38 um die Klappachse 52 relativ zu dem Halterungselement 50 beim Verstellen der Tischeinrichtung 10 aus der Gebrauchsstellung 14 in die Verstaustellung 12 zu ermöglichen, weist die Tischplatte 38 vorliegend eine Gleitschräge 62 auf, entlang welcher das Halterungselement 50 relativ zu der Tischplatte 38 beim Verstellen der Tischplatte 38 relativ zu dem Halterungselement 50 entlang der Klappachse 52 gleiten kann. Die Gleitschräge 62 und/oder die Feder der dritten Federeinrichtung 60 ermöglichen somit, dass die Tischplatte 38 beim Hochklappen um die Klappachse 52 relativ zu dem Halterungselement 50 in eine gewünschte Stellung gebracht wird, um zu ermöglichen, dass die Tischplatteneinrichtung 20 ohne Kollision eingeschwenkt werden kann, insbesondere in die Mittelkonsole 24. Ein zweiter Anschlag 64 der Tischplatte 38 kann in Anlage mit dem Halterungselement 50 eine Ausrichtung des Halterungselements 50 zu der Tischplatte 38 sichern, insbesondere in der Ausgangsstellung für das Rückschwenken der Tischplatteneinrichtung 20.

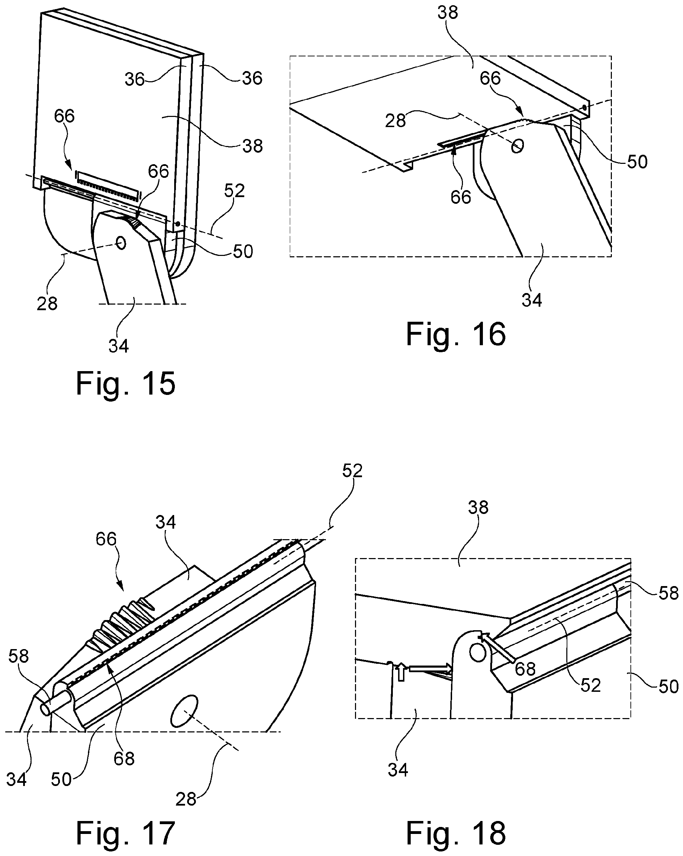

Um die Tischplatte 38 in den jeweiligen Positionen entlang der Klappachse 52 relativ zu dem Halterungselement 50 fixieren zu können, ist es vorgesehen, dass sowohl die Tischplatte 38 als auch das Stützelement 34 jeweils Zähne 66 aufweisen, welche dazu eingerichtet sind, gemeinsam eine Verzahnung auszubilden. Diese Zähne 66 können besonders gut in den Fig. 15 bis 17 erkannt werden. Zusätzlich zu der Fixierung der Tischplatte 38 relativ zu dem Halterungselement 50 entlang der Klappachse 52 kann die Verzahnung ein unbeabsichtigtes Kippen der Tischplatte 38 relativ zu dem Stützelement 34 um die zweite Schwenkachse 28 unterbinden. In Fig. 15 ist die Tischplatte 38 in einem relativ zu dem Stützelement 34 um die Klappachse 52 hochgeklappten Zustand dargestellt, in welchem die Zähne 66 der Tischplatte 38 und des Stützelements 34 beabstandet zueinander angeordnet sind und somit keine Verzahnung ausbilden. In Fig. 16 ist die Tischplatte 38 in einer heruntergeklappten Position um die Klappachse 52 dargestellt, in welcher die Zähne 66 der Tischplatte 38 in die Zähne 66 des Stützelements 34 eingreifen, wodurch die Verzahnung ausgebildet ist. In der Gebrauchsstellung 14 greifen somit die Zähne 66 der Tischplatte 38 in die Zähne 66 des Stützelements 34 ein.

Um die Tischplatte 38 in ihrer um die Klappachse 52 heruntergeklappten Position zu stabilisieren, kann das Halterungselement 50, wie in den Fig. 17 und 18 erkannt werden kann, einen dritten Anschlag 68 aufweisen. Weiterhin kann die Tischplatte 38 in der heruntergeklappten Position auf dem Stützelement 34 abgestützt sein, wie in Fig. 18 erkannt werden kann. Hierdurch kann zusätzlich zu der Verzahnung für das Positionieren der Tischplatte 38 relativ zu dem Stützelement 34 eine Stabilisierung der Tischplatte 38 über das Stützelement 34 erfolgen. Soll die Tischplatte 38 relativ zu dem Stützelement 34 gekippt werden, insbesondere um die zweite Schwenkachse 28, oder verschoben werden, insbesondere entlang der Klappachse 52, dann kann die Tischplatte 38 ein paar Grad angehoben werden relativ zu dem Stützelement 34, wodurch die Verzahnung gelöst wird und die Tischplatte 38 relativ zu dem Stützelement 34 bewegt werden kann. Die Verzahnung ermöglicht, dass unbeabsichtigtes Verschieben und Kippen der Tischplatte 38 relativ zu dem Stützelement 34 unterbunden werden kann. Das Abstützen der Tischplatte 38 in der Gebrauchsstellung 14 über den dritten Anschlag 68 an dem Halterungselement 50 sowie an dem Stützelement 34 ermöglicht, dass eine die zweite Schwenkachse 28 vorgebende Achse der Tischeinrichtung 10 besonders wenig belastet wird.

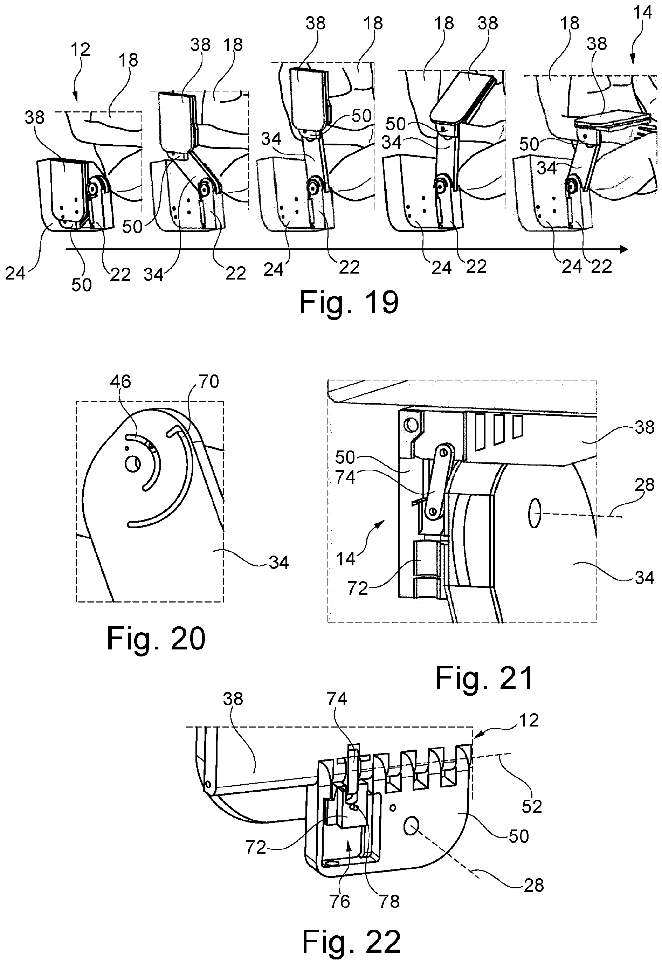

In Fig. 19 ist ein Verfahrensschema für ein Verstellen der Tischeinrichtung 10 in einer vierten Ausführungsform aus der Verstaustellung 12 in die wenigstens eine Gebrauchsstellung 14 dargestellt. Bei dieser vierten Ausführungsform ist die Tischplatteneinrichtung 20 über das Stützelement 34 an der Halteeinrichtung 22 gehalten, wobei die erste Schwenkachse 26 und die zweite Schwenkachse 28 parallel zueinander ausgerichtet sind. Weiterhin umfasst die Tischplatteneinrichtung 20 die Tischplatte 38 sowie das Halterungselement 50, relativ zu welchem die Tischplatte 38 um die Klappachse 52 geklappt werden kann. Bei der vierten Ausführungsform ist es vorgesehen, dass die Verschwenkbewegung des Stützelements 34 um die erste Schwenkachse 26 relativ zu der Halteeinrichtung 22 mit der Verschwenkbewegung der Tischplatteneinrichtung 20 um die zweite Schwenkachse 28 relativ zu dem Stützelement 34 und zusätzlich mit einer Klappbewegung der Tischplatte 38 um die Klappachse 52 relativ zu dem Halterungselement 50 gekoppelt ist.

Um diese Kopplung zu ermöglichen, weist das Stützelement 34, wie in Fig. 20 erkannt werden kann, zusätzlich zu der ersten Führungskulisse 46 eine zweite Führungskulisse 70 auf. In dieser zweiten Führungskulisse 70 kann ein Schlitten 72 der Tischplatteneinrichtung 20 geführt sein. Beim Verschwenken der Tischplatteneinrichtung 20 relativ zu dem Stützelement 34 wird der Schlitten 72 in der zweiten Führungskulisse 70 relativ zu dem Stützelement 34 geführt. An dem Schlitten 72 ist ein Verbindungselement 74 gelenkig gehalten. Dieses Verbindungselement 74 ist somit einenends gelenkig an dem Schlitten 72 gehalten und andernends gelenkig an der Tischplatte 38 gehalten. Über eine Kontur der zweiten Führungskulisse 70 kann der Schlitten 72 relativ zu dem Stützelement 34 geführt werden, wodurch die über das Verbindungselement 74 an dem Schlitten 72 gehaltene Tischplatte 38 um die Klappachse 52 relativ zu dem Stützelement 34 geklappt werden kann. Der Schlitten 72 ist in Fig. 21 in der Gebrauchsstellung 14 der Tischeinrichtung 10 gezeigt und in Fig. 22 in der Verstaustellung 12 der Tischeinrichtung 10 dargestellt. Der Schlitten 72 ist in einer Ausnehmung 76 des Halterungselements 50 translatorisch relativ zu dem Halterungselement 50 bewegbar eingeführt. Hierdurch kann bei einer in Fig. 22 vertikal nach unten wirkenden Bewegung des Schlittens 72 über das Verbindungselement 74 die Tischplatte 38 nach vorne um die Klappachse 52 relativ zu dem Halterungselement 50 geklappt werden. Bei der zweiten Führungskulisse 70 handelt es sich somit um eine Steuerkurve, in welcher ein Zapfen 78 des Schlittens 72 läuft. Der Schlitten 72 kann alternativ als Schieber bezeichnet werden. Der Schlitten 72 steuert die Bewegung des Verbindungselements 74, bei welchem es sich somit um eine Steuerstange handelt und über welche die Tischplatte 38 um die Klappachse 52 gekippt werden kann. Der Schlitten 72 kann über eine Feder und/oder einen Dämpfer in der Ausnehmung 76 gedämpft sein, um ein gedämpftes Kippen der Tischplatte 38 um die Klappachse 52 relativ zu dem Halterungselement 50 zu ermöglichen.

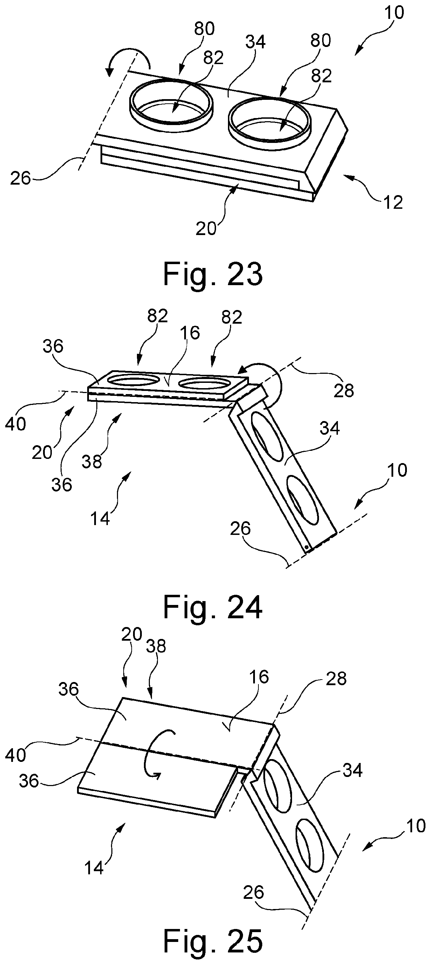

In den Fig. 23 bis 25 ist die Tischeinrichtung 10 in einer vierten Ausführungsform gezeigt. Hierbei ist die Tischeinrichtung 10 in Fig. 23 in ihrer Verstaustellung 12 und in den Fig. 24 und 25 in jeweiligen unterschiedlichen Gebrauchsstellungen 14 gezeigt. Die Tischeinrichtung 10 umfasst in ihrer vierten Ausführungsform die Halteeinrichtung 22, welche in den Fig. 23 bis 25 nicht gezeigt ist. Die Tischeinrichtung 10 umfasst in ihrer vierten Ausführungsform das Stützelement 34 sowie die an dem Stützelement 34 gehaltene Tischplatteneinrichtung 20. Hierbei sind die erste Schwenkachse 26 und die zweite Schwenkachse 28 parallel zueinander ausgerichtet. Die Tischplatteneinrichtung 20 umfasst zwei Tischplattenelemente 36, welche um die dritte Schwenkachse 40 relativ zueinander verschwenkt werden können. Die Tischplattenelemente 36 sind in der Fig. 25 um die dritte Schwenkachse 40 aufgeklappt und in Fig. 24 um die dritte Schwenkachse 40 zusammengeklappt dargestellt. Wie in den Fig. 23 bis 25 erkannt werden kann, weist das Stützelement 34 zwei kreisförmige Aufnahmen 80 auf, welche jeweils durch eine Materialaussparung bereitgestellt sind. Vorliegend weisen die Aufnahmen 80 einen kreisrunden Querschnitt auf. In der Verstaustellung 12 der Tischeinrichtung 10 wird in Einbaulage der Tischeinrichtung 10 in dem Fahrzeug die Tischplatteneinrichtung 20 durch das Stützelement 34 nach oben überdeckt, wobei die Aufnahmen 80 jeweilige Becherhalter für Getränke bereitstellen. Jeweilige Becher in den Aufnahmen 80 können an jeweiligen die Aufnahmen 80 begrenzenden Wandungen des Stützelements 34 gehalten werden. In der Verstaustellung 12 sind die Aufnahmen 80 in Einbaulage der Tischeinrichtung 10 in dem Fahrzeug mit ihrem kreisförmigen Querschnitt zumindest im Wesentlichen waagrecht ausgerichtet.

Bei einem Verstellen der Tischeinrichtung 10 aus der Verstaustellung 12 in die wenigstens eine Gebrauchsstellung 14 wird das Stützelement 34 um die erste Schwenkachse 26 im Fahrzeug verschwenkt, wodurch die kreisförmigen Querschnitte der Aufnahmen 80 schräg zur Waagrechten im Fahrzeuginnenraum angeordnet sind, wie in Fig. 24 und 25 erkannt werden kann. Für das Bereitstellen der Tischfläche 16 wird die Tischplatteneinrichtung 20 um die zweite Schwenkachse 28 relativ zu dem Stützelement 34 verschwenkt. Die Tischplatte 38 kann in ihrer in der Verstaustellung 12 dem Stützelement 34 zugewandten Seite jeweilige mit den Aufnahmen 80 in Überdeckung angeordnete Einbuchtungen 82 aufweisen, wodurch in der Verstaustellung 12 der Tischeinrichtung 10 die Becherhalter mit einer besonders großen Tiefe bereitgestellt werden können, wodurch wiederum Getränke in den Becherhaltern besonders sicher gehalten werden können. Bei der in Fig. 24 gezeigten Gebrauchsstellung 14 der Tischeinrichtung 10 sind die Einbuchtungen 82 der Tischplatte 38 an der die Tischfläche 16 bereitstellenden Oberfläche der Tischplatte 38 angeordnet. Hierdurch kann in der Gebrauchsstellung 14 ein Becher bei dessen Anordnung in den jeweiligen Einbuchtungen 82 gegen seitliches Verschieben gesichert sein. In den Fig. 23 bis 25 sind mit jeweiligen Pfeilen die Verschwenkbewegungen der Tischeinrichtung 10 um die Schwenkachsen 26, 28, 40 beim Verstellen der Tischeinrichtung 10 aus der Verstaustellung 12 in die jeweiligen Gebrauchsstellungen 14 gezeigt.

In den Fig. 26 bis 28 ist die Tischeinrichtung 10 in einer sechsten Ausführungsform dargestellt. Hierbei ist die Tischeinrichtung 10 in Fig. 26 in der Verstaustellung 12, in Fig. 27 in einer Zwischenposition und in Fig. 28 in der Gebrauchsstellung 14 dargestellt. In der sechsten Ausführungsform umfasst die Tischeinrichtung 10 die Halteeinrichtung 22, welche relativ zu der Mittelkonsole 24 bewegbar an der Mittelkonsole 24 gehalten ist. Hierbei ist die Halteeinrichtung 22 insbesondere translatorisch relativ zu der Mittelkonsole 24 bewegbar. Weiterhin umfasst die Tischeinrichtung 10 in der sechsten Ausführungsform zwei Stützelemente 34, welche jeweils um eine erste Schwenkachse 26 schwenkbar an der Halteeinrichtung 22 gehalten sind. Hierbei sind in jeder Stellung der Tischeinrichtung 10 die Stützelemente 34 parallel zueinander ausgerichtet. Vorliegend sind die Stützelemente 34 jeweils als ebene Platten ausgestaltet. Die Tischeinrichtung 10 umfasst in der sechsten Ausführungsform weiterhin die Tischplatteneinrichtung 20, an welcher beide Stützelemente 34 um jeweils eine zweite Schwenkachse 28 schwenkbar gehalten sind. Sowohl die ersten Schwenkachsen 26 als auch die zweiten Schwenkachsen 28 sind zueinander parallel ausgestaltet. Insbesondere sind die ersten Schwenkachsen 26 zu den zweiten Schwenkachsen 28 parallel ausgerichtet. Die Tischplatteneinrichtung 20 umfasst in der sechsten Ausführungsform der Tischeinrichtung 10 vorliegend lediglich eine ein einziges Tischplattenelement 36 umfassende Tischplatte 38.

Wie in den Fig. 26 bis 28 erkannt werden kann, durchläuft die Tischeinrichtung 10 beim Verschwenken aus der Verstaustellung12 in die Gebrauchsstellung 14 die z-förmige Zwischenstellung, welche in Fig. 27 gezeigt ist, aufgrund der parallelen Anordnung der Stützelemente 34 zueinander. In der sechsten Ausführungsform der Tischeinrichtung 10 kann für ein Bereitstellen einer besonders großen Tischfläche 16 die Tischplatte 38 mehrere Tischplattenelemente 36 umfassen. Bei der sechsten Ausführungsform der Tischeinrichtung 10 kann die Tischplatte 38 mit einfacher Mechanik in einer guten Lage als Gebrauchsstellung 14 angeordnet werden. Die Halteeinrichtung 22 kann relativ zu der Mittelkonsole 24 verschiebbar oder fixiert ausgestaltet sein. Die im Zusammenhang mit den Fig. 23 bis 25 beschriebene fünfte Ausführungsform der Tischeinrichtung 10 kann analog zu der im Zusammenhang mit den Fig. 26 bis 28 beschriebenen sechsten Ausführungsform der Tischeinrichtung 10 relativ zu der Mittelkonsole 24 verschiebbar an der Mittelkonsole 24 gehalten sein. Sowohl bei der fünften Ausführungsform als auch bei der sechsten Ausführungsform der Tischeinrichtung 10 liegen die Tischeinrichtungen 10 in deren Verstaustellung 12 oben auf der Mittelkonsole 24 eingeklappt auf und können von dem Deckelelement 44 der Mittelkonsole 24 überdeckt werden. Um die Verschiebbarkeit der Halteeinrichtung 22 relativ zu der Mittelkonsole 24 zu ermöglichen, kann die Mittelkonsole 24 Führungsschienen aufweisen, in welchen die Halteeinrichtung 22 relativ zu der Mittelkonsole 24 verschiebbar gehalten sein kann.

In der Mittelkonsole 24 können eine oder mehrere Tischeinrichtungen 10 in ihrer Verstaustellung 12 aufgenommen sein.

Die beschriebenen Ausführungsformen der Tischeinrichtung 10 zeigen, wie mehrere Lösungen, die Tischplatte 38 in der Mittelkonsole 24 zu verstauen und in eine günstige Nutzposition zu bringen, bereitgestellt werden können. Bei den jeweiligen Ausführungsformen der Tischeinrichtung 10 sind jeweils besonders wenige Bewegungen der Tischeinrichtung 10 notwendig, um die Tischeinrichtung 10 in die Gebrauchsstellung 14 und insbesondere in der Gebrauchsstellung 14 in eine gute Lage zu bringen.

### BEZUGSZEICHENLISTE

- 10: Tischeinrichtung
- 12: Verstaustellung
- 14: Gebrauchsstellung
- 16: Tischfläche
- 18: Fahrzeuginsasse
- 20: Tischplatteneinrichtung
- 22: Halteeinrichtung
- 24: Mittelkonsole
- 26: erste Schwenkachse
- 28: zweite Schwenkachse
- 30: geknickter Stift
- 32: erste Federeinrichtung
- 34: Stützelement
- 36: Tischplattenelement
- 38: Tischplatte
- 40: Klappachse
- 42: erster Anschlag
- 44: Deckelelement
- 46: erste Führungskulisse
- 48: Koppelstange
- 50: Halterungselement
- 52: dritte Schwenkachse
- 54: erste Federeinrichtung
- 56: Verschiebeeinrichtung
- 58: Stange
- 60: zweite Federeinrichtung
- 62: Gleitschräge
- 64: zweiter Anschlag
- 66: Zähne
- 68: dritter Anschlag
- 70: zweite Führungskulisse
- 72: Schlitten
- 74: Verbindungselement
- 76: Ausnehmung
- 78: Zapfen
- 80: Aufnahme
- 82: Einbuchtung

## Patentansprüche

1. Tischeinrichtung (10) für ein Fahrzeug, welche dazu eingerichtet ist, zwischen einer Verstaustellung (12) und wenigstens einer Gebrauchsstellung (14) verstellt zu werden, mit einer Tischplatteneinrichtung (20), welche dazu eingerichtet ist, in der wenigstens einen Gebrauchsstellung (14) eine Tischfläche (16) bereitzustellen, und mit einer Halteeinrichtung (22), an welcher die Tischplatteneinrichtung (20) gehalten ist, wobei die Tischplatteneinrichtung (20) dazu eingerichtet ist, bei einem Verstellen der Tischeinrichtung (10) zwischen der Verstaustellung (12) und der wenigstens einen Gebrauchsstellung (14) relativ zu der Halteeinrichtung (22) um wenigstens zwei zueinander unterschiedliche Schwenkachsen (26, 28) verschwenkt zu werden.

2. Tischeinrichtung (10) nach Anspruch 1,
**dadurch gekennzeichnet, dass**
eine erste Schwenkachse (26) und die zweite Schwenkachse (28) schräg zueinander ausgerichtet sind.

3. Tischeinrichtung (10) nach Anspruch 2,
**dadurch gekennzeichnet, dass**
die erste Schwenkachse (26) und die zweite Schwenkasche (28) durch einen geknickten Stift (30) vorgegeben werden, über welchen die Tischplatteneinrichtung (20) an der Halteeinrichtung (22) gehalten ist.

4. Tischeinrichtung (10) nach einem der vorhergehenden Ansprüche,
**dadurch gekennzeichnet, dass**
ein die Tischplatteneinrichtung (20) mit der Halteeinrichtung (22) verbindendes Stützelement (34) vorgesehen ist, welches an der Halteeinrichtung (22) um die erste Schwenkachse (26) schwenkbar gehalten ist und an welchem die Tischplatteneinrichtung (20) um die zweite Schwenkachse (28) schwenkbar gehalten ist.

5. Tischeinrichtung (10) nach Anspruch 1 oder Anspruch 4 in Rückbezug auf Anspruch 1,
**dadurch gekennzeichnet, dass**
die Schwenkachsen (26, 28) parallel zueinander ausgerichtet sind.

6. Tischeinrichtung (10) nach Anspruch 4 oder 5,
**dadurch gekennzeichnet, dass**
die Tischplatteneinrichtung (20) eine die Tischfläche (16) in der wenigstens einen Gebrauchsstellung (14) bereitstellende Tischplatte (38) und ein Halterungselement (50) umfasst, welches an dem Stützelement (34) um die erste Schwenkachse (26) schwenkbar gehalten ist, wobei die Tischplatte (38) dazu eingerichtet ist, relativ zu dem Halterungselement (50) um eine Klappachse (52) geklappt zu werden.

7. Tischeinrichtung (10) nach Anspruch 6,
**dadurch gekennzeichnet, dass**
die Tischplatte (38) und das Stützelement (34) jeweils Zähne (66) umfassen, welche dazu eingerichtet sind, miteinander eine Verzahnung einzugehen, über welche die Tischplatte (38) relativ zu dem Stützelement (34) in ihrer Ausrichtung fixiert werden kann.

8. Tischeinrichtung (10) nach Anspruch 6 oder 7,
**dadurch gekennzeichnet, dass**
die Tischplatteneinrichtung (20) eine Verschiebeeinrichtung (56) umfasst, welche dazu eingerichtet ist, ein Verschieben der Tischplatte (38) relativ zu dem Halterungselement (50) entlang der Klappachse (52) zu ermöglichen.

9. Tischeinrichtung (10) nach Anspruch 8,
**dadurch gekennzeichnet, dass**
die Verschiebeeinrichtung (56) ein Federelement umfasst, welches dazu eingerichtet ist, nach einem Verschieben der Tischplatte (38) relativ zu dem Halterungselement (50) die Tischplatte (38) mittels Federkraft rückzustellen.

10. Tischeinrichtung (10) nach einem der Ansprüche 6 bis 9,
**dadurch gekennzeichnet, dass**
eine in einer Führungskulisse (46) des Stützelements (34) geführte Koppelstange (48) vorgesehen ist, welche einenends an der Halteeinrichtung (22) und anderenends an dem Halterungselement (50) gehalten ist, wodurch über die Koppelstange (48) in Abhängigkeit von einer Schwenkposition des Stützelements (34) relativ zu der Halteeinrichtung (22) ein Klappen der Tischplatte (38) relativ zu dem Halterungselement (50) ausgelöst wird.

11. Tischeinrichtung (10) nach Anspruch 10,
**dadurch gekennzeichnet, dass**
eine Federeinrichtung (54) vorgesehen ist, welche dazu eingerichtet ist, die Koppelstange (48) mit einer Federkraft zu beaufschlagen, wodurch eine Bewegung der Koppelstange (48) in der Führungskulisse (46) ausgelöst werden kann.

12. Tischeinrichtung (10) nach einem der Ansprüche 4 bis 11,
**dadurch gekennzeichnet, dass**
das Stützelement (34) dazu eingerichtet ist, in der Verstaustellung (12) wenigstens einen Becherhalter bereitzustellen.

13. Tischeinrichtung (10) nach einem der Ansprüche 4 bis 12,
**dadurch gekennzeichnet, dass**
zwei Stützelemente (34) vorgesehen sind, welche jeweils um eine erste Schwenkachse (26) schwenkbar an der Halteeinrichtung (22) gehalten sind und welche jeweils um eine zweite Schwenkachse (28) schwenkbar an der Tischplatteneinrichtung (20) gehalten sind.

14. Tischeinrichtung (10) nach einem der vorhergehenden Ansprüche,
**dadurch gekennzeichnet, dass**
die Tischplatteneinrichtung (20) wenigstens zwei Tischplattenelemente (36) umfasst, welche dazu eingerichtet sind, für ein Vergrößern oder Verkleinern der Tischfläche (16) relativ zueinander um eine dritte Schwenkachse (40) verschwenkt zu werden.

15. Tischeinrichtung (10) nach einem der vorhergehenden Ansprüche,
**dadurch gekennzeichnet, dass**
die Halteeinrichtung (22) dazu eingerichtet ist, an einer Mittelkonsole (24) des Fahrzeugs relativ zu der Mittelkonsole (24) verschiebbar gehalten zu werden.
